# EUROPÄISCHE PATENTSCHRIFT

(11) **EP 2 374 762 B1**
(45) Veröffentlichungstag und Bekanntmachung des Hinweises auf die Patenterteilung: **19.09.2012**
(21) Anmeldenummer: 10003555.9
(22) Anmeldetag: 31.03.2010
(51) Int. Cl.: C02F 1/467, C02F 1/461

(54) **Anlage und Verfahren zur Erzeugung einer elektrochemisch aktivierten Lösung**
Assembly and method for generating an electrochemically activated solution
Installation et procédé de production d'une solution activée de manière électrochimique

(43) Veröffentlichungstag der Anmeldung: 12.10.2011
(73) Patentinhaber: Caliopa AG, 6314 Unterägeri (CH)
(72) Erfinder: Hans-Georg Mathé, 78647 Trossingen (DE)
(74) Vertreter: Tergau & Walkenhorst

(56) Entgegenhaltungen:
- EP-A1- 1 728 768
- US-A- 4 790 946
- US-A- 5 858 202
- US-A1- 2009 008 268
- US-A1- 2009 014 337
- US-A1- 2009 314 718

## Beschreibung

Die Erfindung betrifft eine Anlage und ein Verfahren zur Erzeugung einer elektrochemisch aktivierten Lösung durch Elektrolyse.

In einer Elektrolysevorrichtung, wie sie beispielsweise aus der DE 3000313 A1 oder aus der US 4,056,452 bekannt ist, wird ein Medium durch Anlegen einer Versorgungsspannung zwischen einer Anode und einer Kathode elektrolytisch zersetzt. Bei Verwendung von Wasser als Medium wird dabei Wasserstoff und Sauerstoff gebildet. Eine derartige Elektrolysevorrichtung kann somit zur bedarfsgerechten Erzeugung von Wasserstoff und/oder Sauerstoff eingesetzt werden.

Aus der US 2009/0314718 A1 ist eine Meerwasser-Entsalzungsanlage bekannt, bei der die salzbildenden Ionen über Elektrolysezellen aus dem Wasserstrom entfernt werden. Eine Eklektrolyseanlage mit einer Mehrzahl von Elektrolysezellen ist aus der US 4,790,946 bekannt.

Aus der EP 1 728 768 A1 ist ein System zur Erzeugung einer elektrochemisch aktivierten Salzlösung durch Elektrolyse bekannt, bei dem ein mit einer Kochsalzlösung oder mit Sole beaufschlagter Wasserstrom einer Elektrolysevorrichtung zugeführt wird. Durch die elektrolytische Zersetzung dieses solehaltigen Wasserstroms kann eine elektrochemisch aktivierte wässrige Salzlösung erhalten werden, die einen vergleichsweise hohen Gehalt an "freiem Chlorin" (wie beispielsweise ermittelbar durch amperometrische Messungen) von bis zu 500 mg/L und ein Redox-Potential zwischen +150 mIV und + 1.350 mIV aufweist. Diese elektrochemisch aktivierte Salzlösung ist auf Grund des vergleichsweise hohen Gehalts an freien Chlorinen besonders günstig als Desinfektionsmittel, beispielsweise zur Entkeimung von Wasser und/ oder wässrigen Lösungen, nutzbar. Darüber hinaus ist die gemäß dem aus der EP 1 728 768 A1 bekannten Konzept erhältliche chemisch aktivierte Salzlösung nach den Angaben in der WO 2009/013019 aber auch besonders günstig als Desinfektionsmittel im allgemeinen Sinne, also beispielsweise für Arbeitsplatten, Tische, Böden, zu Sterilisationszwecken, in Wäschereien oder dergleichen oder auch als Trägermaterial in pharmazeutischen Substanzen nutzbar.

Aus der RU 2157793 C1 ist ein System zur Erzeugung einer elektrochemisch aktiven Lösung durch Elektrolyse unter Verwendung einer Mehrzahl von Elektrolysezellen gemäß dem Oberbegriff des Anspruchs 1 bekannt.

Eine wichtige Kennzahl für die Nutzbarkeit der elektrochemisch aktivierten Salzlösungen in derartigen Anwendungen ist der Gehalt an freien Chlorinen sowie der pH-Wert. Für eine besonders hohe bakteriozide oder antibakterielle Wirkung ist hierbei ein möglichst hoher Gehalt an freiem Chlorin wünschenswert, wobei zudem gerade im Hinblick auf Verwendungen als Desinfektionsmittel oder für medizinische Zwecke eine besonders gute Lagerbeständigkeit wünschenswert ist, wobei auch nach langer Lagerung der Materialien nur geringe Rückgänge in der antibakteriellen Wirkung auftreten sollten. Gerade im Hinblick auf diese Parameter und ihre Vereinbarkeit miteinander sind die bekannten Konzepte zur Herstellung der elektrochemisch aktivierten Salzlösung jedoch nur begrenzt einsetzbar.

Der Erfindung liegt daher die Aufgabe zu Grunde, eine Anlage der oben genannten Art zur Erzeugung einer elektrochemisch aktivierten Lösung, insbesondere Salzlösung, durch Elektrolyse anzugeben, mit der eine besonders hohe Wirksamkeit der Lösung, auch bei besonders hoher Lagerbeständigkeit der Lösung erreichbar ist. Des Weiteren soll ein für den Betrieb der Anlage besonders geeignetes Verfahren zur Erzeugung einer elektrochemisch aktivierten Lösung durch Elektrolyse angegeben werden.

Bezüglich der Anlage wird diese Aufgabe erfindungsgemäß dadurch gelöst, dass die ersten Elektrodenräume der Elektrolysezellen elektrisch einer gemeinsamen ersten Polarität zugeordnet und medienseitig parallel geschaltet und die zweiten Elektrodenräume der Elektrolysezellen elektrisch einer zweiten Polarität zugeordnet und medienseitig in Reihe geschaltet sind, wobei an die ersten Elektrodenräume der Elektrolysezellen medienabströmseitig Abströmleitungen angeschlossen sind, die in einem Sammelpunkt zusammengeführt sind, wobei der Sammelpunkt medienseitig mit dem zweiten Elektrodenraum der in Strömungsrichtung des Elektrolyten gesehen ersten Elektrolysezelle verbunden ist.

Das Elektrolysemodul der Anlage umfasst somit mehrere Elektrolysezellen mit jeweils zumindest zwei Elektrodenräumen, nämlich einen zum elektrischen Anschluss an den "+"-Pol einer anzulegenden Elektrolysespannung vorgesehenen Anodenraum und einem zum elektrischen Anschluss an den "-" -Pol der Elektrolysespannung vorgesehenen Kathodenraum. Die Elektrodenräume der ersten Polarität, also die Kathodenräume oder alternativ auch die Anodenräume, sollen dabei medienseitig, also bzgl. der Beaufschlagung mit Elektrolyt und auch bzgl. der Abführung des "verbrauchten" Elektrolyts, parallel geschaltet sein. Dabei werden aus einem gemeinsamen Versorgungssystem die jeweiligen ersten Elektrodenräume der einzelnen Elektrolysezellen aus einer sich verzweigenden gemeinsamen Versorgungsleitung bedient, und der nach dem Durchlauf durch die jeweiligen ersten Elektrodenräume noch verbleibende Elektrolyt wird anschließend in einem gemeinsamen Abführsystem aus den ersten Elektrodenräumen abgeführt. Im Gegensatz zu dieser parallelen Medienstromführung durch die Elektrodenräume der ersten elektrischen Polarität ist seitens der zweiten, dem elektrisch "anderen" Pol zugeordneten Elektrodenräume aber in der Art einer mehrstufigen oder kaskadierten Verschaltung vorgesehen, dass diese Elektrodenräume der Elektrolysezellen vom Elektrolyt sequentiell oder hintereinander durchströmt werden sollen. Somit erfährt der Elektrolyt in der Art einer kaskadierten Behandlung stufenweise in den einzelnen Elektrolysezellen hintereinander mehrfache Behandlungsschritte, so dass eine mehrstufige und damit besonders weit gehende Anreicherung von Ionen im Elektrolyten erreichbar ist.

Die kaskadenartige Durchströmung einer Mehrzahl von hintereinandergeschalteten Elektrodenräumen kann dabei anodenseitig (bei paralleler Durchströmung der Kathodenräume), kathodenseitig (bei paralleler Durchströmung der Anodenräume) oder auch in serieller Kombination derartiger Verschaltungsstufen vorgesehen sein. Zur Herstellung einer hochgradig wirksamen Lösung, charakterisiert durch einen besonders hohen Gehalt an freien Chlorinen, ist in besonders vorteilhafter Ausgestaltung die medienseitige Parallelschaltung der Kathodenräume der Elektrolysezellen bei medienseitiger Reihenschaltung der Anodenräume der Elektrolysezellen vorgesehen. Durch eine derartige kaskadierte Behandlung gerade des Anolyten kann eine besonders weitgehende Anreicherung und Aufkonzentration von Chloridionen im Anolyten erreicht werden, so dass gerade im Hinblick auf beispielsweise gewünschte Desinfektionseigenschaften besonders hochwertiger Anolyt hergestellt werden kann. Alternativ ist durch umgekehrte Verschaltung (kaskadenartige Serienschaltung der Kathodenräume bei paralleler Verschaltung der Anodensäure) die Bereitstellung besonders hochwertigen Katholyts mit günstigen Wascheigenschaften möglich.

Wie sich überraschenderweise herausgestellt hat, kann gerade auf diese Weise im Anolyten nach dem Durchlaufen von mehreren, insbesondere von mindestens zwei, Behandlungsstufen ein besonders hoher Gehalt an freiem Chlorin von bis zu 2.000 mg/L erreicht werden, wobei der solchermaßen hergestellte Anolyt zudem auch noch eine besonders hohe Lagerbeständigkeit aufweist. Die nachfolgenden Erläuterungen besonders bevorzugter Ausführungsformen der Erfindung erfolgen daher anhand der Variante einer medienseitigen Parallelschaltung der Kathodenräume bei medienseitiger Reihenschaltung der Anodenräume; analoge Vorteile sind aber auch bei umgekehrter Verschaltung, also Parallelschaltung der Anodenräume in Kombination mit Reihenschaltung der Kathodenräume, erreichbar.

Wie sich weiterhin in überraschender Weise herausgestellt hat, sind besonders günstige Materialeigenschaften des Anolyten hinsichtlich des Gehalts an freiem Chlorin und auch hinsichtlich der Lagerbeständigkeit erreichbar, indem die Kathodenräume der Elektrolysezellen medienabströmseitig mit dem Anodenraum der in Strömungsrichtung des Anolyten gesehen ersten Elektrolysezelle verbunden sind. Mit anderen Worten: In dieser medienseitigen Verschaltung führen die an die Kathodenräume der Elektrolysezellen angeschlossenen Abströmleitungen vorzugsweise zu einem Sammelpunkt, an dem sie in eine gemeinsame Leitung einmünden. Diese ist ausgangsseitig an den in Strömungsrichtung des Anolyten gesehen ersten Anodenraum der von den Elektrolysezellen anodenseitig gebildeten Kaskade angeschlossen. In dieser Schaltung wird das aus den Kathodenräumen abströmende Katholyt somit als Anolyt der mehrstufigen Kaskadenschaltung aus Anodenräumen zugeführt. Hierdurch kann unter anderem die "Abfallmenge" des in diesem Fall nicht erwünschten Katholyts besonders gering gehalten werden.

In vorteilhafter Ausgestaltung ist dabei eine Abführleitung zum Abführen überschüssigen Katholyts vorgesehen, die an der die Kathodenräume der Elektrolysezellen mit dem Anodenraum der in Strömungsrichtung des Anolyten gesehen ersten Elektrolysezelle verbindenden Überströmleitung abzweigt. Wie sich überraschenderweise herausgestellt hat, können gerade durch geeignete Einstellung und Veränderung des Verzweigungsverhältnisses in diesem Bereich, also durch gezielte Einstellung des Anteils am Gesamtstrom des aus den Kathodenräumen abströmenden Katholyts, der als Anolyt der weiteren Behandlung zugeführt wird, gezielt wesentliche Parameter des entstehenden Endprodukts, insbesondere Gehalt an freiem Chlorin, der pH-Wert und/oder die Lagerbeständigkeit, beeinflusst werden. Insbesondere kann durch geeignete Einstellung des Verzweigungsverhältnisses die Durchlaufrate und damit die Verweil- und Reaktionszeit des Anolyten in Relation zum Katholyten verändert werden, so dass eine besonders gezielte Aufkonzentration der Ionen erreichbar ist. Des Weiteren ist dadurch bedarfsweise eine Einstellung der Druckverhältnisse und/oder der Strömungsgeschwindigkeiten möglich.

Zur Herstellung der elektrochemisch aktivierten Salzlösung wird der im Elektrolysemodul vorteilhafterweise ein mit Salzlösung oder Sole versetzter Medienstrom aus enthärtetem Wasser zugeleitet. Die Solekonzentration im Wasserstrom kann dabei vorzugsweise vergleichsweise gering gehalten sein, beispielsweise kann ein 5% - Anteil (Pharma-Aseca z.B. 9% = isotonisch, Lebensmittelbereich < 5%) an gesättigter Sole (diese umfasst einen Salzgehalt Na⁺ CL⁻ 359 g/l) im Wasser für Anwendungen im Lebensmittelbereich oder ein 9%-Anteil (entspricht einer isotonischen Konzentration) für Anwendungen im pharmazeutischen Bereich vorgesehen sein. Zur Einspeisung zur Dosierung der Sole in den Wasserstrom ist vorteilhafterweise eine Venturidüse vorgesehen, die in die den Kathodenräumen vorgeschaltete Zuströmleitung geschaltet und eingangsseitig mit einem Solebehälter verbunden ist. Zur Zuführung eines geeigneten Grundmediums ist zudem in weiterer vorteilhafter Ausgestaltung die den Kathodenräumen vorgeschaltete Zuströmleitung eingangsseitig mit einer Wasserenthärterstation verbunden.

Um bei vergleichsweise hohem Durchsatz einen besonders hohen Wirkungsgrad bei der Erzeugung der elektrochemisch aktivierten Salzlösung im Elektrolysemodul zu gewährleisten, ist vorteilhafterweise die für die Ionenwanderung der Bestandteile durch die Membran hindurch verfügbar gehaltene aktive Oberfläche besonders groß. Um dies zu ermöglichen und gezielt zu begünstigen, wird die Anlage in vorteilhafter Ausgestaltung gezielt für eine Minimierung oder Verhinderung einer Verblockung der Elektrodenflächen und/oder Membranflächen durch in den Medienströmen mitgeführte Gasanteile oder -bläschen ausgestaltet. Im Hinblick auf den kathodenseitig in Folge des Elektrolyseprozesses entstehenden Wasserstoff, der in unerwünschter Weise zur Bildung derartiger Gasbläschen beitragen könnte, ist in vorteilhafter Ausgestaltung an die Kathodenräume der Elektrolysezellen jeweils ein Entgasungsmodul angeschlossen. Dieses umfasst zweckmäßigerweise eine an den Kathodenraum angeschlossene Entgasungsleitung und ggf. darüber hinaus noch geeignete, im Kathodenraum angeordnete Mittel zur Förderung des Gasaustrags aus dem Katholyten, beispielsweise Verwirbler.

In konstruktiver Hinsicht sind grundsätzlich verschiedene Möglichkeiten zur Ausgestaltung des Elektrolysemoduls und der dieses bildenden Elektrolysezellen möglich. Insbesondere könnten die Elektrolysezellen als so genannte Platten-oder Membranelektrolyseure unter Verwendung von zwischen geeigneten Gehäuse- oder Elektrodenplatten angeordneten keramischen oder kunststoffbasierten Plattenmembranen ausgelegt sein. Eine besonders kompakte Bauweise bei besonders hoher betrieblicher Sicherheit ist aber erreichbar, indem das Elektrolysemodul in vorteilhafter Ausgestaltung in Hohlzylinderbauweise angefertigt ist. Dabei ist vorteilhafterweise ein die Anode der jeweiligen Elektrolysezelle bildender Hohlzylinder konzentrisch von einer Membran und diese wiederum konzentrisch von einem die Kathode bildenden Hohlzylinder umgeben.

Um dabei einen besonders hohen Mediendurchsatz und eine besonders hohe Wirksamkeit bei der Erzeugung der elektrochemisch aktivierten Salzlösung zu ermöglichen, ist der jeweils die Anode bildende Hohlzylinder dabei vorteilhafterweise mit einer Anzahl von Durchströmöffnungen versehen. Die Durchströmöffnungen sind dabei zweckmäßigerweise derart ausgestaltet, dass sie einerseits zur Vergrößerung der aktiven Anodenoberfläche (insbesondere durch Medienkommunikation zwischen Innen- und Außenraum der Anode) beitragen und andererseits beim Durchströmen des Mediums Verwirbelungen in diesem bewirken. Durch diese Verwirbelungen ist einerseits die Durchmischung des Mediums und damit die Homogenität der erzeugten Ionen und Partikel im Medium und andererseits die Benetzung der aktiven Oberfläche mit "unverbrauchtem" Medium besonders begünstig.

Bezüglich des Verfahrens zur Erzeugung der elektrochemisch aktivierten Salzlösung durch Elektrolyse von solehaltigem Wasser unter Verwendung eines eine Mehrzahl von Elektrolysezellen umfassenden Elektrolysemoduls wird die genannte Aufgabe gelöst, indem jede Elektrolysezelle jeweils einen ersten Elektrodenraum und einen von diesem durch eine Membran getrennten zweiten Elektrodenraum umfasst, wobei der Elektrolyt den ersten Elektrodenräumen, vorzugsweise den Kathodenräumen, der Elektrolysezellen parallel und den zweiten Elektrodenräumen, vorzugsweise den Anodenräumen, der Elektrolysezellen in Reihenschaltung zugeführt wird. Damit ist die vorgesehene kaskadenartige oder mehrstufige Behandlung vorzugsweise des Anolyten durch sequentiellen Durchlauf der hintereinander geschalteten Anodenräume sichergestellt, wobei der Katholyt geeignet in paralleler Bespeisung über die entsprechend verschalteten Kathodenräume geführt wird. Vorteilhafterweise wird dabei aus den Kathodenräumen der Elektrolysezellen abströmender Katholyt, in besonders bevorzugter Ausgestaltung lediglich ein Teilstrom dieses Katholyts, als Anolyt dem Anodenraum der in Strömungsrichtung des Anolyten gesehen ersten Elektrolysezelle zugeführt.

Die mit der Erfindung erzielten Vorteile bestehen insbesondere darin, dass durch die Kombination einer parallelen Medienstromführung bei der Bespeisung der ersten Elektrodenräume, vorzugsweise der Kathodenräume, mit einer kaskadenartigen, mehrstufigen Behandlung des Elektrolyten durch Hintereinanderschaltung der zweiten Elektrodenräume, vorzugsweise der Anodenräume, mit besonders hoher Zuverlässigkeit und vergleichsweise hohem Wirkungsgrad und hoher Durchsatzrate als Anolyt eine elektrochemisch aktivierte Lösung hergestellt werden kann, die sich gerade hinsichtlich ihrer charakteristischen Eigenschaften wie freiem Chloringehalt und Lagerbeständigkeit deutlich von bisher bekannten Produkten abhebt. Durch das genannte Konzept kann somit eine elektrochemisch aktivierte Lösung hergestellt werden, die bei hoher Lagerbeständigkeit und einem pH-Wert von etwa 7,6 einen besonders hohen Gehalt an freiem Chlorin, insbesondere von mehr als 500 mg/L und bis zu 2.000 mg/L, bei einem Redoxpotential von 700 mV bis 1200 mV, vorzugsweise 800 mV - 900 mV, aufweist. Die mit dem beschriebenen Konzept erstellbare elektrochemisch aktivierte Lösung ist somit auf besonders günstige und vorteilhafte Weise in weiten Anwendungsbereichen als hochgradig wirksames Desinfektionsmittel oder auch in medizinischen oder pharmazeutischen Anwendungen als hochgradig bakterizider oder antibakterieller Wirkstoff oder Trägersubstanz verwendbar.

Ein Ausführungsbeispiel der Erfindung wird anhand einer Zeichnung näher erläutert. Darin zeigen:
- FIG. 1: eine Anlage zur Erzeugung einer elektrochemisch aktivierten Salzlösung durch Elektrolyse, und
- FIG. 2: eine alternative Ausführungsform der Anlage nach FIG 1.

Gleiche Teile sind in beiden Figuren mit denselben Bezugszeichen versehen.

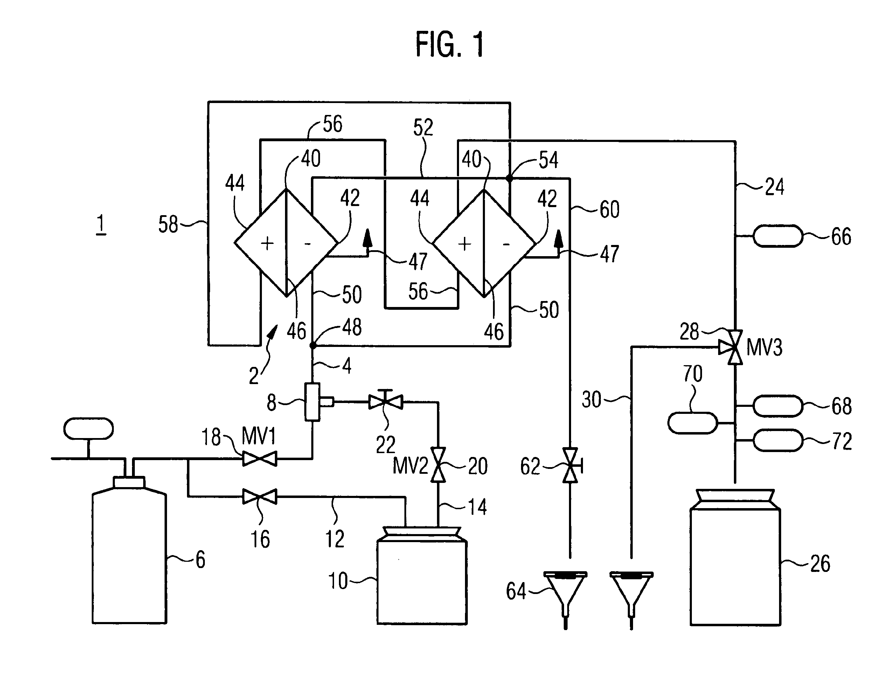

Die Anlage 1 gemäß Figur 1 ist zur Erzeugung einer elektrochemisch aktivierten Salzlösung durch Elektrolyse vorgesehen. Dazu umfasst die Anlage 1 ein Elektrolysemodul 2, dem eingangsseitig über eine Versorgungsleitung 4 ein Elektrolysemedium zuführbar ist. Als Elektrolysemedium ist dabei mit Sole oder einer wässrigen Salzlösung versetztes enthärtetes Wasser vorgesehen. Dazu ist die Zuströmleitung 4 eingangsseitig mit einer Wasserenthärterstation 6 verbunden. Zur Zudosierung der Sole in das enthärtete Wasser ist in die Zuströmleitung 4 eine Venturidüse 8 geschaltet, die ihrerseits eingangsseitig mit einem Solebehälter 10 verbunden ist. Von der Zuführungsleitung 4 zweigt zudem nach der Wasserenthärtestation 6 eine Ablaufleitung 12 ab, über die während einer Inbetriebnahmephase der Anlage 1 der Wasserstrom aus der Wasserenthärterstation 6 unter Umgehung des Elektrolysemoduls 2 der nachfolgenden Komponenten in den Solebehälter 10 abführbar ist. Zur Umschaltung zwischen diesen Betriebszuständen mit dem Dauerbetriebszustand sowie zur dosierten Einspeisung einer vorgebbaren Solemenge in das Elektrolysemedium sind in die Zuführleitung 4, die Ablaufleitung 12 sowie die in die Venturidüse 8 mündende Soleeinspeiseleitung 14 geeignete Ventile 16, 18, 20 und zusätzlich in die Einspeiseleitung 14 ein Drosselventil 20 geschaltet.

Ausgangsseitig, zur Abführung der im Elektrolysemodul 2 hergestellten elektrochemisch aktivierten Salzlösung, ist an das Elektrolysemodul 2 eine Abströmleitung 24 angeschlossen, die ausgangsseitig in einen Vorratsbehälter 26 für die hergestellte Salzlösung oder den Anolyten mündet. Zur vorübergehenden Umgehung des Vorratsbehälters 26 während der Inbetriebnahmephase der Anlage 1 ist in die Ablaufleitung 24 zudem ein Multiwegeventil 28 geschaltet, dessen zweiter Ausgang an eine Abflussleitung 30 angeschlossen ist.

Die Anlage 1 ist zur Herstellung einer elektrochemisch aktivierten Salzlösung mit gerade zur Verwendung als Desinfektionsmittel oder antibakteriellem Wirkstoff in beispielsweise medizinischen oder pharmazeutischen Anwendungen besonders günstigen Eigenschaften, insbesondere mit einem besonders hohen Gehalt an freiem Chlorin von vorzugsweise mehr als 500 mg/L und bis zu 2.000 mg/L bei hoher Lagerfähigkeit, ausgelegt. Um dies zu ermöglichen, ist das Elektrolysemodul 2 mehrkomponentig aufgebaut und umfasst eine Mehrzahl von Elektrolysezellen 40, von denen im Ausführungsbeispiel lediglich zwei dargestellt sind; selbstverständlich können analog zu den folgenden Ausführungen aber auch noch weitere Elektrolysezellen 40 vorgesehen sein.

Jede Elektrolysezelle 40 umfasst jeweils einen ersten Elektrodenraum bildenden Kathodenraum 42 und einen zweiten Elektrodenraum bildenden Anodenraum 44, die jeweils durch eine Membran 46 voneinander getrennt sind. Das Anlegen einer elektrischen Spannung zwischen einer den jeweiligen Anodenraum 44 begrenzenden Anode einerseits und einen den jeweiligen Kathodenraum 42 begrenzenden Kathode andererseits bewirkt sodann eine Ionenwanderung über die zwischen liegende Membran 46 hinweg, so dass eine zumindest teilweise Dissoziation des im Elektrolysemedium enthaltenen Wassers sowie eine zumindest teilweise Dissoziation der in Form von Sole mitgeführten Salzanteile auftritt. Auf Grund der elektrischen Ladung der Ionen in diesen Materialien führt dieser lonenwanderungsprozess in Folge der angelegten elektrischen Spannung zu einer Anreicherung von Cl⁻ und OH- im jeweiligen Anodenraum 44 und zu einer Anreicherung von H⁺ und Na⁺ im jeweiligen Kathodenraum 42. Zur bedarfsweisen Abführung von demzufolge im jeweiligen Kathodenraum 42 oder ersten Elektrodenraum angereichertem Wasserstoffgas ist der Kathodenraum 42 jeweils mit einer Entgasungsleitung 47 verbunden. Diese bildet, ggf. in Kombination mit im Kathodenraum 42 angeordneten Mitteln zur Bläschenerzeugung oder Gasabscheidung wie beispielsweise Verwirbler oder dergleichen, ein Entgasungsmodul für den jeweiligen Kathodenraum 42.

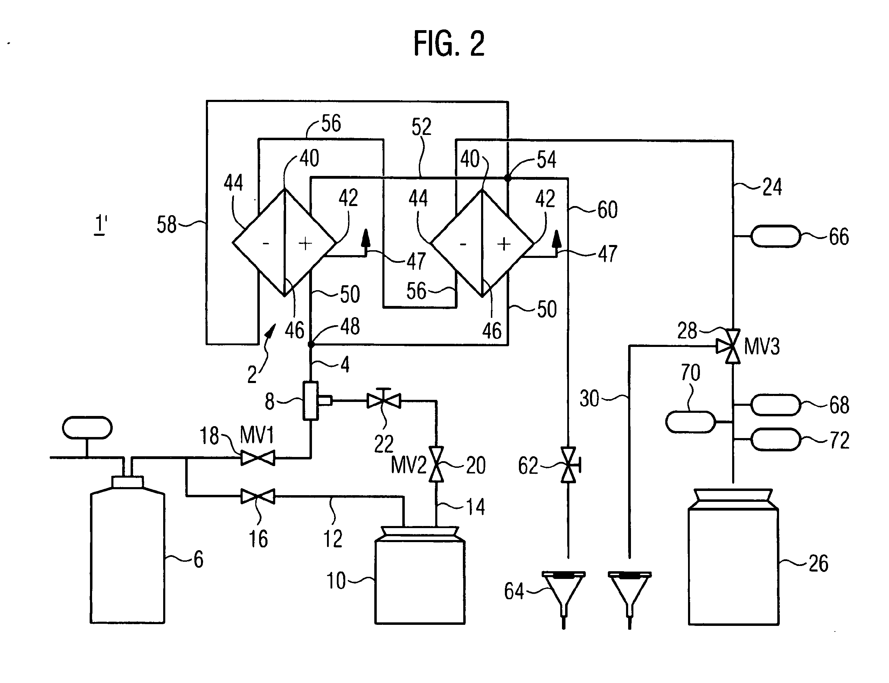

Die gewünschten, qualitativ hochwertigen Eigenschaften der elektrochemisch aktivierten Salzlösung werden in der Anlage 1 insbesondere durch eine spezifische Führung der Medienströme im Elektrolysemodul 2 erreicht. Dabei ist in der Anlage 1 gemäß dem Ausführungsbeispiel, die gezielt auf die Bereitstellung von elektrochemisch hochgradig aktiviertem Anolyt ausgerichtet ist, eine kathodenseitig im Wesentlichen parallele Medienstromführung mit einer anodenseitig im Wesentlichen seriellen Medienstromführung kombiniert. Alternativ oder bei abweichendem Auslegungsziel kann auch eine anodenseitig im Wesentlichen parallele mit einer kathodenseitig im Wesentlichen seriellen Medienstromführung kombiniert sein, wie dies im alternativen Ausführungsbeispiel für die Anlage 1' gemäß FIG. 2 dargestellt ist. Darüberhinaus können auch noch weiterführende Kombinationen dieser medienseitigen Verschaltungen vorgesehen sein.

Im Einzelnen ist dabei in der Anlage 1 im Ausführungsbeispiel in der Zuströmleitung 4 ein Verzweigungspunkt 48 vorgesehen, von dem aus in der Art einer parallelen Medienzuführung in die Kathodenräume 42 der Elektrolysezellen 40 mündende Zuleitungen 50 abgehen. Ausgangsseitig der Kathodenräume 42 sind Abströmleitungen 52 vorgesehen, die in einem Sammelpunkt 54 zusammengeführt sind, so dass sich insgesamt eine medienseitig parallele Verschaltung der Kathodenräume 42 ergibt.

Anodenseitig ist hingegen eine Reihen- oder Hintereinanderschaltung der Anodenräume 44 für den Anolyten vorgesehen. Dazu ist der in Strömungsrichtung des Anolyten gesehen im ersten Elektrolysemodul 40 zugeordnete Anodenraum 44 ausgangsseitig über eine Überströmleitung 56 mit der Eingangsseite des nachfolgenden Anodenraums 44 verbunden. Dieser ist seinerseits ausgangsseitig an die Abströmleitung 24 angeschlossen, so dass sich in der Art einer mehrstufigen oder kaskadenartigen Ausführung eine Hintereinanderschaltung der Anodenräume 44 bzgl. des Anolyten ergibt.

Zudem ist in der Anlage 1 vorgesehen, den aus den Kathodenräumen 42 abströmenden Katholyten als Anolyt in die hintereinander geschalteten Anodenräume 44 einzuspeisen. Dazu ist der Sammelpunkt 54 für den Katholyten über eine Überströmleitung 58 mit dem Anodenraum 44 der in Strömungsrichtung des Anolyten gesehen ersten Elektrolysezelle 40 verbunden.

Von der Überströmleitung 58 zweigt im Sammelpunkt 54 zudem eine Abführleitung 60 ab, über die ein in seiner Menge über ein Drosselventil 62 einstellbarer Teilstrom des Katholyten einem Abwassersystem oder einem Auffangbehälter 64 zugeführt werden kann. Mit dieser Anordnung ist es möglich, eine einstellbare Teilmenge des aus den Kathodenräumen 42 abströmenden Katholyten als Anolyt der Kaskade aus Anodenräumen 44 zuzuführen. Damit können unter anderem die individuellen Reaktionsparameter wie beispielsweise Druck und Fließgeschwindigkeit in den Anodenräumen 44 geeignet beeinflusst werden, und zudem kann die Menge des in diesem Anwendungsfall als "Abfallprodukt" anfallenden Katholyts besonders gering gehalten werden.

Zur Überprüfung der Materialeigenschaften des hergestellten Anolyten sowie zur Mengenmessung sind im Übrigen in die Abströmleitung 24 eine Anzahl von Sensoren, insbesondere ein Mengensensor 66, ein Temperatursensor 68, ein pH-Sensor 70 sowie ein Sensor 72 zur Messung des Redoxpotentials, geschaltet.

Wie bereits erwähnt ist die Anlage 1 gemäß FIG. 1 gezielt für die Bereitstellung von besonders hochwertigem Anolyt durch kaskadenartige medienstromseitige Hintereinanderschaltung der Anodenräume 44 bei medienstromseitiger Parallelschaltung der Kathodenräume 42 ausgelegt. Im alternativen Ausführungsbeispiel gemäß FIG. 2 ist die Anlage 1' hingegen für die Bereitstellung von besonders angereichertem Katholyt durch kaskadenartige Hintereinanderschaltung der Kathodenräume 42 bei Parallelschaltung der Anodenräume 44 ausgelegt. Desweiteren sind natürlich bedarfsweise auch kombinierte Verschaltungen dieser Grundkonzepte möglich.

### Bezugszeichenliste

- 1: Anlage
- 2: Elektrolysemodul
- 4: Versorgungsleitung
- 6: Wasserenthärterstation
- 8: Venturidüse
- 10: Solebehälter
- 12: Ablaufleitung
- 14: Soleeinspeiseleitung
- 16, 18: Ventil
- 20: Drosselventil
- 24: Abströmleitung
- 26: Vorratsbehälter
- 28: Multiwegeventil
- 30: Abflussleitung
- 40: Elektrolysezelle
- 42: Kathodenraum
- 44: Anodenraum
- 46: Membran
- 48: Verzweigungspunkt
- 50: Zuleitung
- 52: Abströmleitung
- 54: Sammelpunkt
- 56: Überströmleitung
- 58: Überströmleitung
- 60: Abführleitung
- 62: Drosselventil
- 64: Auffangbehälter
- 66: Mengensensor
- 68: Temperatursensor
- 70: pH-Sensor
- 72: Sensor

- 80: Hohlzylinder
- 82: Halterung
- 84: Öffnung
- 86: Membran
- 88: Hohlzylinder
- 90: Durchströmöffnung

## Patentansprüche

1. Anlage (1) zur Erzeugung einer elektrochemisch aktivierten Lösung mit einem eine Mehrzahl von Elektrolysezellen (40) umfassenden Elektrolysemodul (2), bei dem jede Elektrolysezelle (40) jeweils einen ersten Elektrodenraum und einen von diesem durch eine Membran (46) getrennten zweiten Elektrodenraum umfasst,
**dadurch gekennzeichnet, dass**
die ersten Elektrodenräume der Elektrolysezellen (40) elektrisch einer gemeinsamen ersten Polarität zugeordnet und medienseitig parallel geschaltet und die zweiten Elektrodenräume der Elektrolysezellen (40) elektrisch einer gemeinsamen zweiten Polarität zugeordnet und medienseitig in Reihe geschaltet sind, wobei an die ersten Elektrodenräume der Elektrolysezellen (40) medienabströmseitig Abströmleitungen (52) angeschlossen sind, die in einem Sammelpunkt (54) zusammengeführt sind, wobei der Sammelpunkt (54) medienseitig mit dem zweiten Elektrodenraum der in Strömungsrichtung des Elektrolyten gesehen ersten Elektrolysezelle (40) verbunden ist.

2. Anlage (1) nach Anspruch 1, bei der die ersten Elektrodenräume der Elektrolysezellen (40) jeweils als Kathodenräume (42) und die zweiten Elektrodenräume der Elektrolysezellen (40) jeweils als Anodenräume (44) ausgestaltet sind.

3. Anlage (1) nach Anspruch 1 oder 2, bei der von einer die ersten Elektrodenräume der Elektrolysezellen (40) mit dem zweiten Elektrodenraum der in Strömungsrichtung des Elektrolyten gesehen ersten Elektrolysezelle (40) verbindenden Überströmleitung (56, 58) eine Abführleitung (60) abzweigt.

4. Anlage (1) nach einem der Ansprüche 1 bis 3, in deren den ersten Elektrodenräumen vorgeschaltete Zuströmleitung (4) eine eingangsseitig mit einem Solebehälter (10) verbundene Venturidüse (8) geschaltet ist.

5. Anlage (1) nach einem der Ansprüche 1 bis 4, deren den ersten Elektrodenräumen vorgeschaltete Zuströmleitung (4) eingangsseitig mit einer Wasserenthärtestation (6) verbunden ist.

6. Anlage (1) nach einem der Ansprüche 1 bis 5, an deren als Kathodenräume (42) vorgesehene Elektrodenräume jeweils ein Entgasungsmodul angeschlossen ist.

7. Verfahren zur Erzeugung einer elektrochemisch aktivierten Lösung durch Elektrolyse von solehaltigem Wasser in einem eine Mehrzahl von Elektrolysezellen (40) umfassenden Elektrolysemodul (2), bei dem jede Elektrolysezelle (40) jeweils einen ersten Elektrodenraum und einen von diesem durch eine Membran (46) getrennten zweiten Elektrodenraum umfasst, wobei der Elektrolyt den ersten Elektrodenräumen der Elektrolysezellen (40) parallel und den zweiten Elektrodenräumen der Elektrolysezellen (40) in Reihenschaltung zugeführt wird, und wobei aus den ersten Elektrodenräumen der Elektrolysezellen (40) abströmender Elektrolyt zunächst gesammelt und anschließend zumindest teilweise dem zweiten Elektrodenraum der in Strömungsrichtung des Elektrolyten gesehen ersten Elektrolysezelle (40) zugeführt wird.

8. Verfahren nach Anspruch 7, bei dem lediglich ein Teilstrom des aus den ersten Elektrodenräumen der Elektrolysezellen (40) abströmenden Elektrolyts dem zweiten Elektrodenraum der in Strömungsrichtung des Elektrolyten gesehen ersten Elektrolysezelle (40) zugeführt wird.

## Claims

1. An installation (1) for generating an electrochemically activated solution with an electrolysis module (2) comprising a plurality of electrolysis cells (40), wherein each electrolysis cell (40) comprises a first electrode space and a second electrode space separated therefrom by a diaphragm (46), **characterized in that** the first electrode spaces of the electrolysis cells (40) are electrically associated with a common first polarity and switched in parallel on the medium side, and that the second electrode spaces of the electrolysis cells (40) are electrically associated with a common second polarity and switched in series on the medium side, outflow lines (52) being connected to the first electrode spaces of the electrolysis cells (40) on the medium outflow side, said outflow lines (52) being brought together in a collection point (54), the collection point (54) being connected on the medium side with the second electrode space of the first electrolysis cell (40), viewed in flow direction of the electrolyte.

2. The installation (1) of claim 1, wherein the first electrode spaces of the electrolysis cells (40) are designed in each case as cathode spaces (42) and the second electrode spaces of the electrolysis cells (40) are designed in each case as anode spaces (44).

3. The installation (1) of claim 1 or 2, wherein a drain line (60) branches off from an overflow line (56, 58) connecting the first electrode spaces of the electrolysis cells (40) with the second electrode space of the first electrolysis cell (40), viewed in flow direction of the electrolyte.

4. The installation (1) of any of claims 1 to 3, in whose inflow line (4) switched upstream of the first electrode spaces, a venturi tube connected on the entry side with a brine container (10) is inserted.

5. The installation (1) of any of claims 1 to 4, whose inflow line (4) switched upstream of the first electrode spaces is connected on the entry side with a water softening station (6).

6. The installation (1) of any of claims 1 to 5, to whose electrode spaces provided as cathode spaces (42), a degassing module is connected in each case.

7. A method for generating an electrochemically activated solution through electrolysis of briny water in an electrolysis module (2) comprising a plurality of electrolysis cells (40), wherein each electrolysis cell (40) comprises a first electrode space and a second electrode space separated therefrom by a diaphragm (46), wherein the electrolyte is fed to the first electrode spaces of the electrolysis cells (40) in parallel connection and to the second electrode spaces of the electrolysis cells (40), in series connection, and wherein electrolyte flowing out of the first electrode spaces of the electrolysis cells (40) is first of all collected and then fed, at least partially, to the second electrode space of the first electrolysis cell (40), viewed in flow direction of the electrolyte.

8. The method of claim 7, wherein only a partial flow of the electrolyte flowing out of the first electrode spaces of the electrolysis cells (40) is fed to the second electrode space of the first electrolysis cell (40), viewed in flow direction of the electrolyte.

## Revendications

1. Installation (1) pour générer une solution activatée électrochimiquement avec un module d'électrolyse (2) comprenant une pluralité de cellules d'électrolyse (40), dans laquelle chaque cellule d'électrolyse (40) comprend un premier espace d'électrode et un second espace d'électrode séparé de celui-ci par un diaphragme (46), **caractérisée en ce que** les premiers espaces d'électrode des cellules d'électrolyse (40) sont associés électriquement à une première polarité commune et montés en parallèle du côté de milieu, et **en ce que** les seconds espaces d'électrode des cellules d'électrolyse (40) sont associés électriquement à une seconde polarité commune et montés en série du côté milieu, des conduites d'écoulement (52) étant reliées avec les premiers espaces d'électrode des cellules d'électrolyse (40) du côté d'écoulement du milieu, dites conduites d'écoulement (52) étant réunies dans un point de collection (54), le point de collection (54) étant relié du côté de milieu avec le second espace d'électrode de la première cellule d'électrolyse (40), vue en direction de courant de l'électrolyte.

2. Installation (1) d'après la revendication 1, dans laquelle les premiers espaces d'électrode des cellules d'électrolyse (40) sont conçus à chaque fois comme espaces de cathode (42) et les seconds espaces d'électrode des cellules d'électrolyse (40) sont conçus à chaque fois comme espaces d'anode (44).

3. Installation (1) d'après la revendication 1 ou 2, dans laquelle une conduite de décharge (60) se branche d'une conduite de trop-plein (56, 58) reliant les premiers espaces d'électrode des cellules d'électrolyse (40) avec le second espace d'électrode de la première cellule d'électrolyse (40), vue en direction de courant de l'électrolyte.

4. Installation (1) d'après l'une quelconque des revendications 1 à 3, dans la conduite d'affluence (4) de laquelle, montée en amont des premiers espaces d'électrode, un tube de Venturi, relié du côté d'entrée avec un récipient de saumure (10), est inséré.

5. Installation (1) d'après l'une quelconque des revendications 1 à 4, dont la conduite d'affluence (4) montée en amont des premiers espaces d'électrode est reliée du côté d'entrée avec une station d'adoucissement d'eau (6).

6. Installation (1) d'après l'une quelconque des revendications 1 à 5, avec les espaces d'électrode de laquelle, pourvus comme espaces de cathode (42), un module de dégazage est relié à chaque fois.

7. Procédé pour générer une solution activatée électrochimiquement à l'aide d'électrolyse d'eau contenant de la saumure dans un module d'électrolyse (2) comprenant une pluralité de cellules d'électrolyse (40), dans lequel chaque cellule d'électrolyse (40) comprend un premier espace d'électrode et un second espace d'électrode séparé de celui-ci par un diaphragme (46), dans lequel l'électrolyte est alimenté aux premiers espaces d'électrode des cellules d'électrolyse (40) en montage en parallèle et aux seconds espaces d'électrode des cellules d'électrolyse (40) en montage en série, et dans lequel de l'électrolyte qui s'écoule des premiers espaces d'électrode des cellules d'électrolyse (40) est d'abord collecté et ensuite alimenté, au moins partiellement, au second espace d'électrode de la première cellule d'électrolyse (40), vue en direction de courant de l'électrolyte.

8. Procédé d'après la revendication 7, dans lequel seulement un courant partiel de l'électrolyte qui s'écoule des premiers espaces d'électrode des cellules d'électrolyse (40) est alimenté au second espace d'électrode de la première cellule d'électrolyse (40), vue en direction de courant de l'électrolyte.
